# EUROPEAN PATENT SPECIFICATION

(11) **EP 1 206 145 B1**
(45) Date of publication and mention of the grant of the patent: **02.02.2005**
(21) Application number: 00403157.1
(22) Date of filing: 13.11.2000
(51) Int. Cl.: H04Q 7/22

(54) **Call setup in a multimedia network**
Verbindungsaufbau in einem multimediennetz
Etablissement de communications dans un réseau multimédia

(43) Date of publication of application: 15.05.2002
(73) Proprietor: ALCATEL, 75008 Paris (FR)
(72) Inventor: Bos, Lieve Maria Marcella Rosemarijn, 2340 Vlimmeren (BE); Peters, Marco Johannes Hubertus, 4617 NS Bergen op Zoom (NL)
(74) Representative: Narmon, Gisèle Marie Thérèse

(56) References cited:
- WO-A-99/16266
- PLASSE DELPHINE: "Call Control Scenarios in the all-IP UMTS Core Network" THE 11TH IEEE INTERNATIONAL SYMPOSIUM ON PERSONAL, INDOOR AND MOBILE RADIO COMMUNICATION, 2000., vol. 1, 18 - 21 September 2000, pages 322-326, XP002165603

## Description

The present invention relates to a method to route a packet switched mode call as described in the preamble of claim 1, and to a call service means and a second terminal to realize such a method as described, respectively, in claim 9 and claim 10 and to a multi media telecommunication network that comprises such a call service means or such a terminal as described in claim 12.

Such a method and related network devices are already known in the art, for instance in "Call Control Scenarios in an all-IP UMTS Core Network" by D. Plasse. Indeed, within future Universal Mobile Telecommunication Systems UMTS, an UMTS terminal is enabled to make and to receive calls in two ways i.e. in a circuit switched mode and in a packet switched mode. The circuit switched mode uses the classical mobile telephony protocols and the packet switched mode uses Voice over Internet Protocols VolP. In such networks a user defines different preferences for the routing of calls which are stored in service logic for routing of incoming calls and which are depending on these two possible modes of his terminal i.e. circuit switched mode and packet switched mode. Depending of different parameters of a desired call such like cost, time of the day, who is calling to who, a user might have a preference to receive his call either in circuit switched mode or either in packet switched mode. As an example, a destined user may prefer to receive a call from its boss between 9am and 17am, according to a high quality circuit switched mode. However, in the event when these conditions do not apply he might prefer that a call is routed to him according to a less quality and eventual cheaper packet switched mode.

It has to be explained that the terminology packet switched mode and circuit switched mode refers to the bearer level technology used in the telecommunication system. IP networks, e.g. GPRS for mobile, are examples of bearer technologies that transport information in packet switched mode. PCM based networks, e.g. the PSTN for fixed, are examples of bearer technologies that transport information in circuit switched mode. On top of the bearer level runs the actual applications. When talking about telephony, the application is the actual call control protocol that runs on top of the bearer. At the application level, different call control protocols exist for different types of bearer levels. For example ISUP is the standard call control protocol used on top of classical circuit switched bearer networks. Protocols like H.323 and SIP are typical call control protocols used on top of packet switched bearer networks.

The present invention is in particular related to packet switched mode calls. It has to be explained that for packet switched mode calls a de-coupling is made between the bearer level attachment i.e. the connection to the Internet Protocol network and the application level attachment i.e. the connection to the VolP system.

The bearer network that is used for transporting the packet switched mode calls is packet based e.g. a Generic Packet Radio System GPRS. A fixed or a mobile user that uses a packet switched terminal has to be registered on a bearer level of the packet network before being able to start any type of communication. With any type of communication is meant communication on the bearer level e.g. surfing on the Internet, as well as on the application level e.g. starting/receiving a VOIP call. This registration phase on the bearer level of the packet network is called the bearer level attachment. It is realized by storing a mapping between the bearer level user identifier against the bearer level location information of this user in a bearer level location register. For a mobile user, such bearer level location information is e.g. the Internet Protocol address and the bearer level user identifier is the International Mobile Subscriber Identity IMSI stored in the Subscriber Identity Module SIM card. Since, furthermore, the IMSI is uniquely related to a user, this user can be unambiguously reached on bearer level by means of this IP address. For a fixed user, once the terminal is coupled to the IP network, the relation is stored in the bearer level location register and is usually not changed anymore. However, for a fixed roaming user i.e. a user that is travelling with its laptop to a foreign country and he plugs its laptop into the Internet there, the bearer level location information can change. Indeed, the user's home service provider will not know that he traveled to this country abroad, unless the user sends him a bearer level attachment. Fixed users, or fixed roaming users, identify themselves to their home service provider by logging in to the network using their private username/password couple. This username/password couple is an example of the bearer level user identifier for fixed, or fixed roaming, users.

In this way, when the user gets a routable IP address from the network of the home operator of the visited operator, the mapping between the username/password couple and this IP address are stored for him into the bearer level location register. Furthermore, for a mobile user, it has to be explained that due to the fact that a bearer level attachment encompasses automatically terminal location, the location of a user is tracked even when the user has no active application. In this way a routable number on bearer level e.g. the user's GPRS IP address is stored in relation to the IMSI of the user in the bearer level location register, which is then called the Home Location Register HLR of the user.

Hereby, a method to route a packet switched mode call from a first terminal of a first user who desires to communicate with a second user, to a second terminal of this second user in a multi media telecommunication network, must comprise a registering step to register this second user via its second terminal according to a bearer level of the telecommunication network. Bearer level location information of the second user is herewith provided and stored in a bearer level location register of the telecommunication network.

Furthermore, a user that desires to use an application e.g. a call control application, to make a packet switched mode call, needs to be registered on the application level of the multi media telecommunication network. This is for instance realized by means of a Session Initiation Protocol. A Session Initiation Protocol SIP is a call control protocol that is standardized within the Internet Engineering Task Force IETF. This protocol can be used for Multi Media over IP MMoIP for UMTS terminals i.e. for call control on an application level of the telecommunication network.

The base SIP protocol is originally developed in IETF for the fixed world. One of the basic assumptions of it is that a user is only reachable via SIP if he has sent a SIP register message to the SIP system i.e. SIP location server. Indeed, as it is known from the use of SIP in the fixed world, it is only possible to route on application level a packet switched mode call to a roaming user in the event when this roaming user is SIP registered. An application level registration involves storage of application level location information in an application level location register. This application level registration is realized by storing a mapping between the application level user identifier against the application level location information of this user in an application level location register. For the SIP protocol, for the fixed and the mobile world, both the application level user identifier and the application level location information are of the Universal Resource Identifier URI type. The application level user identifier is the URI of the user; examples known in the art are "username@homedomain", "userlPaddress@homedomain" or "userE164@homedomain". The application level location information is the URI of the SIP call control element, called SIP server, that is serving the user; examples known in the art are "SIPservername@homedomain" or SIPserverlPaddress@homedomain".

By using e.g. this base SIP protocol, as such, for call control on the application level of the telecommunication network, a SIP registration is required before a user can be reached via a SIP application on the packet switched mode. Indeed, a roaming mobile user who sends a SIP register message to its home location network telecommunication which is stored in the SIP location register, here called the Home Profile Database, of the user is enabled to employ its packet switched mode and can also be reached via packets switched calls.

However, when the user did not made a registration for call control on an application level of the telecommunication network i.e. for example did not send a SIP register message, the user can not be reached via packet switched mode calls, even when according to its predefined preferences it would be desired.

An object of the present invention is to provide a method to route a packet switched mode call from a first terminal of a first user who desires to communicate with a second user, to a second terminal of the second user such as the above known methods but for the event when the second user is not registered for call control on an application level of the telecommunication network.

This object is achieved by the method of claim 1, which is realized by the call service means of claim 9 and the second terminal of claim 10 and by the multi media telecommunication network of claim 12 that comprises such a call service means or such a terminal.

Indeed, in the event when the second user is not registered for call control on an application level of the telecommunication network the method according to the present invention comprises the additional steps of
a) upon reception of the packet switched mode call for the second user retrieving by a call service means of the telecommunication network, the bearer level location information of the second user from the bearer level location register; and
b) transmitting by the call service means an alerting message, on the bearer level, according to the bearer level location information to the second terminal of the second user and thereby alerting the second terminal of an incoming packet switched mode call in order to enable thereby the second terminal to initialize, upon reception of the alerting message, an application register message for call control on the application level whereby application level location information is provided for storage in an application level location register of the telecommunication network and in order to enable thereby the telecommunication network to route the packet switched mode call to the second terminal of the second user on the application level according to the application level location information.

It has to be remarked that the call service means can firstly control the eventual registration for call control on an application level of said telecommunication network. This means that for example the call service means controls the presence of application level location information in an application level location register for the destined user and in the event when no application level registration is available it executes the method according to the present invention.

In this way, the present invention takes advantage of the insight that for a mobile system, like UMTS, the bearer attachment is always available due to the fact that it encompasses the terminal location information anyway and this bearer attachment is used in order to alert a destined user on bearer level to initialize an application level attachment.

As long as a bearer attachment is available, the invention is also applicable in the fixed world. Indeed, as described above, in the fixed world, as such, the bearer attachment only has to be performed once and, furthermore, for a roaming fixed user, as soon as he made himself known to his home network on the bearer level, the method of the present invention can be applied to route packet switched mode calls to the user, even when he didn't made an application level attachment.

The implementation of when the telecommunication network is a mobile telecommunication network is described in claim 3.

A further characteristic feature is that upon reception of the alerting message by the second terminal, an application register message for call control on the application level is indeed initialized by an initializing means. Hereby, application level location information is generated and will be stored in the application level location register of the telecommunication network whereby the telecommunication network is enabled to route an incoming packet call to this second user i.e. to this second terminal on the application level of the network. This is described in claim 2 and claim 11.

A possible implementation of the bearer level of a telecommunication network can for example an Asymmetric Digital Subscriber Line system ADSL system or a model dial-up access system or a Generic Packet Switched Radio System GPRS. This latter implementation is described in claim 4.

A possible implementation of a call control application level of a telecommunication network is for example H.323 (ITU-T protocol) or a Session Initiation Protocol SIP (IETF protocol). This latter SIP protocol is described in claim 5.

A further characteristic feature is described in claim 6. Indeed, the method according to the present invention can further comprise a checking step in order to check a service preference database of the multi media telecommunication network. This service preference data base is coupled to the call service means and comprises user preferences such as described above e.g. when and under what kind of circumstances a user prefers to receive circuit switched mode calls and packet switched mode calls. In the event of an incoming call for the second user, the call service means first checks this service preference database upon an actual preferred routing mode of this second user. In the event when the preferred routing method is indeed a packet switched routing mode, the previous described steps i.e. retrieving the bearer level location information of the second user and transmitting, accordingly, an alerting message to this second user.

It has to be remarked that such a service preference database can be included in the application location register of the telecommunication network whereby by the call service means immediately two checks might be performed i.e. a check upon the preferences of the user and upon the presence of the application level location information. When a packet switched mode call is preferred but the application location information is not present i.e. the user is not registered for call control on an application level of the telecommunication network, the main steps of the present invention are executed.

A further implementation of the present invention is described in claim 7. Herein the step c) of initializing an application register message, is executed automatically by the second terminal upon reception of the alerting message. According to this method, the second user is not disturbed and its call control registration on the application level is performed without his intervention. The destined user, only has to provide once his preferences to the network operator whereby he will be called according to these preferences i.e. circuit switched mode or to packet switched mode, irrespective of the fact that the user is indeed registered or not registered on the application level.

Another implementation of the present invention is that the second terminal signals the reception of an alerting message to the second user. This can be performed by e.g. generating a beep and displaying a message on a display of the terminal or by just generating a vocal message. Hereby, the destined user gets an opportunity to initiate or not to initiate the application register message of step c). He gets in fact opportunities to drop its stored preferences in the service preference database. When the user desires, nevertheless, to register on the application level of the telecommunication network, he instructs its terminal to execute step c) of the present invention. This is described in claim 8.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

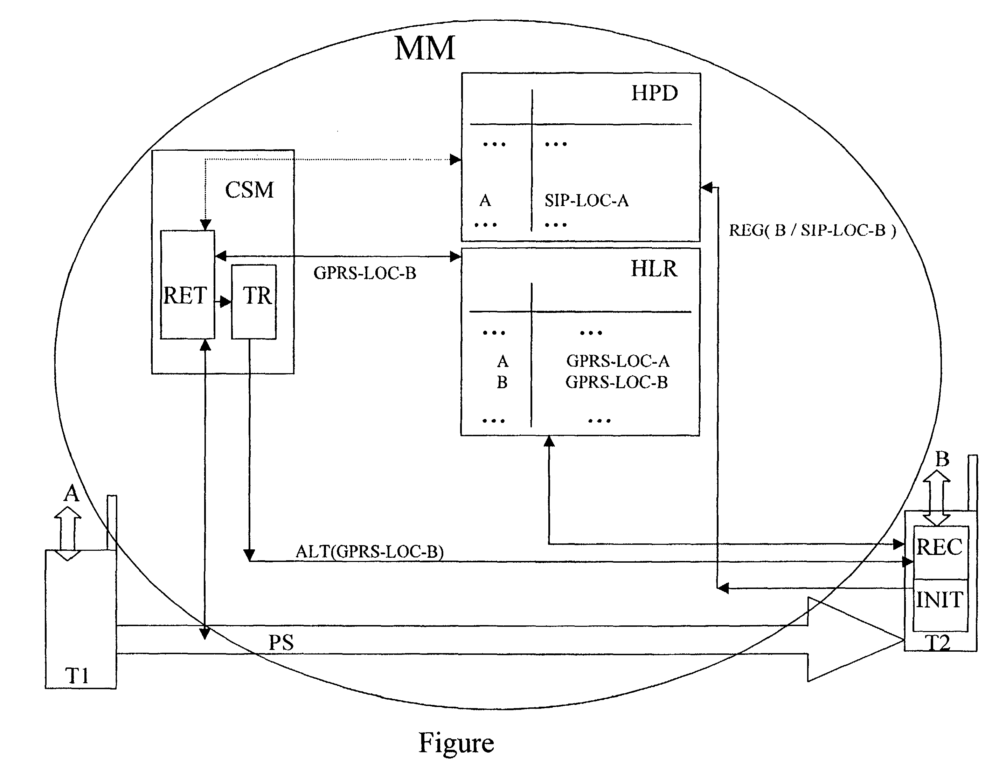

The above and other objects and features of the invention will become more apparent and the invention itself will be best understood by referring to the following description of an embodiment taken in conjunction with the accompanying Figure that represents a multimedia communication network and the related devices according to the present invention.

The working of the devices according to the present invention in accordance with its telecommunication environment will be explained by means of a functional description of the different blocks shown therein. Based on this description, the practical implementation of the blocks will be obvious to a person skilled in the art and will therefor not be described in details. In addition, the principle working of the method to route a packet switched mode call according to the present invention will be described in further detail.

Referring to the Figure, a multimedia telecommunication network MM is shown. The multimedia telecommunication network MM comprises multimedia terminals whereof two are shown i.e. terminal T1 of user A and terminal T2 of user B, and a call service logic device CSM, and a home profile database HPD and a home location register HLR.

It is preferred for this particular embodiment to describe a Universal Mobile Telecommunication network UMTS. However, in order not to overload the Figure, no radio links are shown. Furthermore, it has to be explained that between an UMTS terminal such as T1 and T2 and the network elements that are shown in the Figure, different other network elements are comprised which however are not shown in the Figure in order not to overload it. The radio link between the mobile terminals T1 and T2 and the UMTS network is taken care by an access node. Such an access node and a Radio Network Controller that is coupled thereto form together the access network. The Radio Network Controller is connected to the core network. The core network exists of, among other network elements, a mobile switching center, a Serving GPRS support Node, Gateway GPRS Support Node, the Home Location Register HLR (shown), the home profile database HPD (shown) and the call service logic device (shown). The call service logic device CSM is coupled to the home profile database HPD and to the home location register HLR.

The home location register HLR is a bearer level location register. Such a register stores the information regarding the bearer level location of the different users. It is shown in the Figure, that bearer level location information e.g. GPRS-LOC-B is stored versus a bearer level user identifier of e.g. user B. The bearer level location information e.g. GPRS-LOC-B is an IP address of a terminal T1. The bearer level user identifier is the IMSI of user B. It is preferred in the present description of an embodiment to transport the packet switched mode call over a Generic Packet Radio System GPRS. Since for a mobile network the bearer level attachment encompasses automatically the terminal location, the location of a user is tracked and known to the core network. In this way the GPRS IP address i.e. a routable number is stored as the bearer level location information in the home location register HLR: GPRS-LOC-B for user B and GPRS-LOC-A for user A.

The home profile database HPD comprises an application level location register. The application level location register stores, for each user that is registered for call control on an application level of the telecommunication network, application level location information e.g. SIP-LOC-A for A versus the application level identifier of user A. As call control protocol the Session Initiation Protocol SIP is used. Furthermore, as application level location information it is preferred to use an URI built up by means of the SlPservername and homedomain, as it is described above. As application level user identifier it is preferred to use and URI built up by means of the username and home domain of the user, as it is described above. It has to be remarked that the Figure only shows e.g. SIP-LOC-A, since the way how the application level location information is built up, is not relevant to the aim of the present invention. When a user desires to make a packet switched call, he must first be registered on the application level of the network. This is done by means of a SIP registration. The user e.g. A has to initialize this SIP registration whereby its application level location information SIP-LOC-A is stored in the home profile database HPD.

Furthermore, the home profile database HPD comprises a service preference database. This service preference database comprises, as described above, the user preference for each user regarding e.g. the actual preferred routing mode being circuit switched mode call or packet switched mode call for a call to be received.

It has to be remarked that the home location register HLR and the home profile database HPD are both included in a so-called Home Subscriber Server HSS (not shown), so called by 3GPP UMTS specificazations. However, a further description of the Home Subscriber Server goes beyond the aim of the present invention.

The call service logic device CSM comprises service logic for routing of incoming calls and comprises thereby a retriever RET and a transmitter TR. The call service logic device CSM is comprised in the multimedia network MM to execute the following functions being relevant to the present invention:
- checking by the retriever RET the home profile data base HPD upon the presence of application level location information for a particular user; and
- checking by the retriever RET the home profile data base HPD upon the user preferences of a user. One of the items to be checked by the retriever RET that is particular relevant to the present invention is the actual preferred mode to receive calls i.e. either circuit switched mode or packet switched mode for a predefined user; and
- retrieving by the retriever RET the bearer level location information for a particular user from the home location register HLR in the event when the information is available; and
- transmitting by the transmitter TR an alerting message ALT, on the bearer level i.e. GPRS message, to a user, according to the retrieved bearer level location information of this user.

The multimedia terminals T1 and T2 are both enabled to make a circuit switched mode call or a packet switched mode call.

Besides the required functional blocks to make such kind of calls, a multimedia terminal e.g. T1 or T2 according to the present invention comprises a receiver REC and an initializer INIT.

he receiver REC is comprises to receive an alerting message in order to be alerted of an incoming packet switched mode call and thereby to be alerted of missing application level location information to route this call to the user if he would prefer this.

The initializer INIT is included to initialize an application register message REG, either automatically upon reception of an alerting message or either after displaying alerting message information to the user and upon return of a predefined command by this user. According to this preferred embodiment, both terminals are equipped to execute both situations. This is realized by means of predefined user settings of the user upon its terminal whereby either the above mentioned first situation or either the above mentioned second situation is activated on the terminal.

It has to be remarked that on the Figure only the relevant functional blocks according to the present invention are shown in terminal T1, however these functional blocks are also available in terminal T2.

Finally, the principle working of the method to route a packet switched mode call according to the present invention will be described hereafter in detail by means of an example.

The example implies the following situation. As well user A, as user B, are both attached on bearer level to the multi media telecommunication network MM. This means that in the home location register HLR a entry is made for user A and for user B: the bearer level location information of user A is GPRS-LOC-A and the bearer level location information of user B is GPRS-LOC-B. Furthermore is user A already registered on application level for call control but B is not registered on application level for call control. This means that an entry has been made for A in the application level location register regarding its application level location information i.e. SIP-LOC-A, but no entry has been made for B.

Presume also that user B made a pre-selection upon its terminal T2 in order to be warned upon reception of an alerting message ALT by its terminal T2. This warning is made by means of a sound signal.

User A desires to have a packet switched mode call with user B. Therefor, user A initializes a packet switched call request for user B. The call service logic device CSM receives this packet switched mode call for user B and investigates the actual situation. The call service logic device checks the service preference database upon the actual preferred routing mode of user B. Presume that user B, prefers to receive this call from A according to the packet switched mode call.

Hereafter, the call service logic device CSM checks the availability of the application level location information of user B. But, since B is not registered for call control on an application level of the telecommunication network, no application level location information of user B is available and the network is not able to route this packet switched mode call to user B.

However, according to the present invention, the call service logic device CSM retrieves by means of the retriever RET, the bearer level location information GPRS-LOC-B of user B from the home location register HLR. The retriever RET provides this bearer level location information GPRS-LOC-B to the transmitter TR. When the transmitter receives the bearer level location information GPRS-LOC-B, it transmits an alerting message ALT(GPRS-LOC-B) to this destination i.e. GPRS-LOC-B. The receiver REC of terminal T2 receives the alerting message ALT(GPRS-LOC-B). The receiver REC hereby generates a sound signal in order to warn user B of reception of the alerting message ALT. Presume that user B is in a situation that he indeed desires to receive a packet switched mode call whereby he instructs the receiver REC to continue accordingly. This means that the receiver generates a signal to instruct the initializer INIT to initialize the application level attachment i.e. the initializer INIT generates an application register message REG for user B. The initializer INIT makes an URL that comprises the references of user B and includes this in the application register message REG(SIP-LOC-B). The application register message REG(SIP-LOC-B) is transmitted to the home network of user B and is stored by the appropriate network element in the application level location register of the home profile data base HPD.

Since the application location information SIP-LOC-B of user B became now available in the home profile data base HPD, the call service logic device CSM will have success upon execution of a new checking for the application level location information SIP-LOC-B of user B. This new checking can be initiated according to different implementations.

A possible implementation is that the retriever RET, after having instructed the transmitter TR to transmit an alerting message, starts a predefined delay and, furthermore, after elapse of this delay, makes a new checking for the application level location information of user B.

Another implementation is that the appropriate network element that stores the application level location information SIP-LOC-B of user B in the home profile database HPD also transmits the application level location information SIP-LOC-B with the related reference to user B, to the call service logic device CSM.

For this particular embodiment it is preferred to use the second implementation. Anyway, the aim is the fact that the call service logic device CSM is enabled to continue with the demand of user A i.e. a packet switched mode call with user B.

The telecommunication network is hereby enabled to route the packet switched mode call from A to B according to the available application level location information of user B. This is shown by means of the broad arrow in the Figure.

It has to be remarked that the Figure shows different messages of a sequence of messages that are not necessarily executed at a same time. Also the home location register HLR and the home profile database HPD are shown according to a snapshot. However, the description of above provides support to the Figure in order to understand the sequence of execution of the different messages and the related situation to the shown snapshot of the databases.

Hereafter a second embodiment will be described. It has to be explained that discussions are going on within 3GPP to provide a SIP registration for a user such, as user B, upon initiative of the network. This means that user B doesn't have to make a SIP registration at all since the network takes care of it. This initiative might be taken upon e.g. control by the call service logic device CSM, on regular base, of the home location register HLR and the home profile database HPD. The call service logic device might decide hereby to register each user whereof a bearer level location information is available but no application level location information is available.

According to such a network initiated application level registration, the CSM derives from the bearer level location information GPRS-LOC-B the identity of the visited network in which user B is roaming. Hereby, the home network knows the name of a contact SIP server in the visited network being visited by B via international roaming agreements or via database lookup in the international Domain Name System DNS. The CSM sends a SIP level instruction INST (not shown) to the contact SIP server in the visited network. The instruction INST asks the visited network to assign a SIP server to user B that can handle call control for user B. After assigning a SIP server for call control to user B, the visited network signals back the name of that SIP server to the application level location register of the home profile database HPD in order to store it there as the application level location information SIP-LOC-B of user B.

However, in the event of an incoming packet switched mode call PS for user B and when the second user B is not registered for call control on an application level of the telecommunication network, the same problem occurs i.e. the packet switched mode call for user B can not be routed to user B since its application level location information is not available.

According to such an implementation i.e. network initiated application level registration, step b) of the method of the present invention becomes:
- transmitting by the transmitter TR of the home CSM, the instruction INST to the visited network, whose identity is derived via the bearer level location information GPRS-LOC-B of the user B, to assign a SIP server for call control to that user B; and
- retrieving by a retriever RET' (not shown) of the visited network the URI of a SIP server being assigned to user B who is roaming in this visited network; and
- transmitting by a transmitter TR' (not shown) of the visited network the SIP URI of a SIP server, serving this particular user B, to the home profile database HPD of user B to store the SIP URI of the SIP server as application level location information for this particular user B in the HPD of B.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method to route a packet switched mode call (PS) from a first terminal (T1) of a first user (A) who desires to communicate with a second user (B), to a second terminal (T2) of said second user (B) in a multi media telecommunication network, said method comprises a step of
registering said second user (B) via said second terminal (T2) according to a bearer level of said telecommunication network thereby providing bearer level location information (GPRS-LOC-B) of said second user (B) being stored in a bearer level location register (HLR) of said telecommunication network, **characterized in that** in the event when said second user (B) is not registered for call control on an application level of said telecommunication network said method comprises the steps of :
a) upon reception of said packet switched mode call for said second user (B) retrieving by a call service means (CSM) of said telecommunication network, said bearer level location information (GPRS-LOC-B) of said second user (B) from said bearer level location register (HLR); and
b) transmitting by said call service means (CSM) an alerting message (ALT), on said bearer level, according to said bearer level location information (GPRS-LOC-B) to said second terminal (T2) of said second user (B) and thereby alerting said second terminal (T2) of an incoming packet switched mode call (PS) order to enable thereby said second terminal (T2) to initialize, upon reception of said alerting message (ALT), an application register message (REG) for call control on said application level whereby application level location information (SIP-LOC-B) is provided for storage in an application level location register (HPD) of said telecommunication network and in order to enable thereby said telecommunication network to route said packet switched mode call (PS) to said second terminal (T2) of said second user (B) on said application level according to said application level location information (SIP-LOC-B).

2. The method according to claim 1, **characterized in that** said method further comprises a step c) of initializing, upon reception of said alerting message (ALT) by said second terminal (T2), an application register message (REG) for call control on said application level and thereby providing application level location information (SIP-LOC-B) for storage in an application level location register (HPD) of said telecommunication network in order to enable thereby said telecommunication network to route said packet switched mode call to said second terminal (T2) of said second user (B) on said application level.

3. The method to route a packet switched mode call according to any previous claim, **characterized in that** said telecommunication network is a mobile telecommunication network.

4. The method to route a packet switched mode call according to any previous claim, **characterized in that** said bearer level of said telecommunication network is a Generic Packet Radio System.

5. The method to route a packet switched mode call according to any previous claim, **characterized in that** said call control on application level of said telecommunication network is a Session Initiation Protocol whereby said application register message (REG) is a Session Initiation Protocol register message.

6. A method to route a packet switched mode call, **characterized in that** said method comprises checking a service preference data base of a multi media telecommunication network upon an actual preferred routing mode of said second user (B), and in the event when said actual preferred routing mode is a packet switched routing mode, executing the method to route a packet switched mode call according to any previous claim.

7. The method to route a packet switched mode call according to any one of claim 2 to claim 6, **characterized in that** a step c) of initializing by said second terminal (T2), an application register message (REG) being executed automatically upon reception of said alerting message (ALT).

8. The method to route a packet switched mode call according to any one of claim 2 to claim 6, **characterized in that** said method further comprises upon reception of said alerting message (ALT) by said second terminal (T2), signaling to said second user (B) by said second terminal (T2) of reception of said alerting message (ALT); and instructing by said second user (B) to said second terminal (T2) of execution of said step c).

9. A call service means (CSM) to route a packet switched mode call (PS) from a first terminal (T1) of a first user (A) who desires to communicate with a second user (B), to a second terminal (T2) of said second user (B), said second user (B) being registered via said second terminal (T2) according to a bearer level of said telecommunication network whereby bearer level location information (GPRS-LOC-B) of said second user (B) is provided and stored in a bearer level location register (HLR) of a telecommunication network, **characterized in that** said call service means (CSM) comprises retrieving means (RET) to retrieve, in the event when said second user (B) is not registered for call control on an application level of said telecommunication network, upon reception of said packet switched mode call (PS) for said second user (B), said bearer level location information (GPRS-LOC-B) of said second user (B) from said bearer level location register (HLR) being coupled thereto; and transmitting means (TR) to transmit an alerting message (ALT), on said bearer level, according to said bearer level location information (GPRS-LOC-B) to said second terminal (T2) of said second user (B) in order to thereby alert said second terminal (T2) of an incoming packet switched mode call (PS) and to enable thereby said second terminal (T2) to initialize, upon reception of said alerting message (ALT), an application register message (REG) for call control on said application level whereby application level location information (SIP-LOC-B) is provided for storage in an application level location register (HPD) of said telecommunication network and whereby said telecommunication network is enabled to route said packet switched mode call (PS) to said second terminal (T2) of said second user (B) on said application level according to said application level location information (SIP-LOC-B).

10. A second terminal (T2) of a second user (B) in a multi media telecommunication, said second user (B) being registered via said second terminal (T2) according to a bearer level location information (GPRS-LOC-B) of said second user (B) that is stored in a bearer level location register (HLR) of said telecommunication network, a packet switched mode call (PS) needs to be routed from a first terminal (T1) of a first user (A) who desires to communicate with said second user (B), **characterized in that** said second terminal (T2) comprises receiving means (REC) to receive, in the event when said second user (B) is not registered for call control on an application level of said telecommunication network, an alerting message (ALT) in order to be alerted of an incoming packet switched mode call (PS), said alerting message (ALT) being transmitted by a call service means (CSM) of said telecommunication network to said second terminal (T2) of said second user (B) on said bearer level according to said bearer level location information (GPRS-LOC-B), said bearer level location information (GPRS-LOC-B) being retrieved by said call service means (CSM) upon reception of said packet switched mode call for said second user (B) from said bearer level location register (HLR) accordingly, said second terminal (T2) being thereby enabled to initialize an application register message (REG) for call control on said application level whereby application level location information (SIP-LOC-B) is provided for storage in an application level location register (HPD) of said telecommunication network and in order to enable thereby said telecommunication network to route said packet switched mode call (PS) to said second terminal (T2) of said second user (B) on said application level according to said application level location information (SIP-LOC-B).

11. The second terminal (T2) according to claim 10, **characterized in that** it further comprises initializing means (INIT) to initialize said application register message (REG) for call control on said application level.

12. A multi media telecommunication network, **characterized in that** said network comprises any one of a call service means (CSM) according to claim 9, a second terminal (T2) according to claim 10 and a second terminal (T2) according to claim 11.

## Patentansprüche

1. Verfahren zur Leitweglenkung eines Anrufs im Paketvermittlungs-Modus (PS) von einem ersten Endgerät (T1) eines ersten Teilnehmers (A), der mit einem zweiten Teilnehmer (B) kommunizieren möchte, an ein zweites Endgerät (T2) des zweiten Teilnehmers (B) in einem Multimedien-Telekommunikationsnetz, wobei das Verfahren folgenden Schritt umfasst:
Registrierung des zweiten Teilnehmers (B) über das zweite Endgerät (T2) gemäß einer Übertragungsebene des Telekommunikationsnetzes und dadurch Bereitstellung von Ortsinformationen auf Übertragungsebene (GPRS-LOC-B) des zweiten Teilnehmers (B), die in einem Ortsregister (HLR) auf Übertragungsebene des Telekommunikationsnetzes gespeichert werden, **dadurch gekennzeichnet, dass** in dem Fall, dass der zweite Teilnehmer (B) nicht zur Anrufsteuerung auf einer Anwendungs-Ebene des Telekommunikationsnetzes registriert ist, das Verfahren folgende Schritte umfasst:
a) Bei Empfang des Anrufs im Paketvermittlungs-Modus für den zweiten Teilnehmer (B) Abruf der Ortsinformation auf Übertragungsebene (GPRS-LOC-B) des zweiten Teilnehmers (B) durch ein Anruf-Dienst-Mittel (CSM) des Telekommunikationsnetzes aus dem Ortsregister auf Übertragungsebene (HLR); und
b) Senden einer Benachrichtigungsmeldung (ALT) auf der Übertragungsebene durch das Anruf-Dienst-Mittel (CSM) gemäß der Ortsinformation auf Übertragungsebene (GPRS-LOC-B) an das zweite Endgerät (T2) des zweiten Teilnehmers (B) und dadurch Benachrichtigung des zweiten Endgerätes (T2) über einen eintreffenden Anruf im Paketvermittlungs-Modus (PS), um dadurch das zweite Endgerät (T2) in die Lage zu versetzen, bei Empfang einer Benachrichtigungsmeldung (ALT) eine Anwendungs-Registrierungs-Nachricht (REG) zur Anrufsteuerung auf der Anwendungs-Ebene zu initialisieren, wodurch Ortsinformation auf Anwendungs-Ebene (SIP-LOC-B) zur Speicherung in einem Ortsregister auf Anwendungs-Ebene (HPD) des Telekommunikationsnetzes bereitgestellt wird, und um dadurch das Telekommunikationsnetz in die Lage zu versetzen, den Anruf im Paketvermittlungs-Modus (PS) an das zweite Endgerät (T2) des zweiten Teilmehmers (B) auf der Anwendungs-Ebene gemäß der Ortsinformation auf Anwendungs-Ebene (SIP-LOC-B) zu leiten.

2. Das Verfahren aus Anspruch 1, **dadurch gekennzeichnet, dass** das Verfahren weiterhin einen Schritt c) der Initialisierung einer Anwendungs-Registrierungs-Nachricht (REG) zur Anrufsteuerung auf der Anwendungs-Ebene bei Empfang der Benachrichtigungsmeldung (ALT) durch das zweite Endgerät (T2) umfasst und dadurch der Bereitstellung von Ortsinformation auf Anwendungs-Ebene (SIP-LOC-B) zur Speicherung in einem Ortsregister (HPD) des Telekommunikationsnetzwerkes, um dadurch das Telekommunikationsnetz in die Lage zu versetzen, den Anruf im Paketvermittlungs-Modus an das zweite Endgerät (T2) des zweiten Teilmehmers (B) auf der Anwendungs-Ebene zu leiten.

3. Das Verfahren zur Leitweglenkung eines Anrufs im Paketvermittlungs-Modus gemäß einem beliebigen der vorherigen Ansprüche, **dadurch gekennzeichnet, dass** das Telekommunikationsnetz ein mobiles Telekommunikationsnetz ist.

4. Das Verfahren zur Leitweglenkung eines Anrufs im Paketvermittlungs-Modus gemäß einem beliebigen der vorherigen Ansprüche, **dadurch gekennzeichnet, dass** die Übertragungsebene des Telekommunikationsnetzes ein Generic Packet Radio System ist.

5. Das Verfahren zur Leitweglenkung eines Anrufs im Paketvermittlungs-Modus gemäß einem beliebigen der vorherigen Ansprüche, **dadurch gekennzeichnet, dass** die Anrufsteuerung auf Anwendungs-Ebene des Telekommunikationsnetzes ein Session Initiation Protocol ist, wobei die Anwendungs-Registrierungs-Nachricht (REG) eine Registrierungs-Nachricht des Session Initiation Protocol ist.

6. Ein Verfahren zur Leitweglenkung eines Anrufs im Paketvermittlungs-Modus, **dadurch gekennzeichnet, dass** das Verfahren die Abfrage einer Dienst-Präferenz-Datenbank eines Multimedien-Telekommunikationsnetzes nach einem aktuell bevorzugten Leitweglenkungs-Modus des zweiten Teilnehmers (B) umfasst, und im Fall, dass der aktuell bevorzugte Leitweglenkungs-Modus ein Paketvermittlungs-Leitweglenkungs-Modus ist, die Ausführung des Verfahrens zur Leitweglenkung eines Anrufs im Paketvermittlungs-Modus gemäß einem beliebigen der vorherigen Ansprüche umfasst.

7. Das Verfahren zur Leitweglenkung eines Anrufs im Paketvermittlungs-Modus gemäß einem beliebigen der Ansprüche 2 bis 6, **dadurch gekennzeichnet, dass** ein Schritt c) der Initialisierung einer Anwendungs-Registrierungs-Nachricht (REG) durch das zweite Endgerät (T2) bei Empfang der Benachrichtigungsmeldung (ALT) automatisch ausgeführt wird.

8. Das Verfahren zur Leitweglenkung eines Anrufs im Paketvermittlungs-Modus gemäß einem beliebigen der Ansprüche 2 bis 6, **dadurch gekennzeichnet, dass** das Verfahren weiterhin bei Empfang der Benachrichtigungsmeldung (ALT) durch das zweite Endgerät (T2) die Signalisierung des Empfangs der Benachrichtigungsmeldung (ALT) durch das zweite Endgerät (T2) an den zweiten Teilnehmer (B), sowie die Anweisung durch den zweiten Teilnehmer (B) an das zweite Endgerät (T2) zur Ausführung des Schrittes c) umfasst.

9. Anruf-Dienst-Mittel (CSM) zur Leitweglenkung eines Anrufs im Paketvermittlungs-Modus (PS) von einem ersten Endgerät (T1) eines ersten Teilnehmers (A), der mit einem zweiten Teilnehmer (B) kommunizieren möchte, an ein zweites Endgerät (T2) des zweiten Teilnehmers (B), der über das zweite Endgerät (T2) gemäß einer Übertragungsebene eines Telekommunikationsnetzes registriert wird, wodurch Ortsinformationen auf Übertragungsebene (GPRS-LOC-B) des zweiten Teilnehmers (B) bereitgestellt werden und in einem Ortsregister (HLR) auf Übertragungsebene des Telekommunikationsnetzes gespeichert werden, **dadurch gekennzeichnet, dass** die Anruf-Dienst-Mittel (CSM) Abruf-Mittel (RET) enthalten, um in dem Fall, wenn der zweite Teilnehmer (B) nicht zur Anrufsteuerung auf einer Anwendungs-Ebene des Telekommunikationsnetzes registriert ist, bei Empfang des Anrufs im Paketvermittlungs-Modus (PS) für den zweiten Teilnehmer (B) die Ortsinformation auf Übertragungsebene (GPRS-LOC-B) des zweiten Teilnehmers (B) aus dem Ortsregister auf Übertragungsebene (HLR) abzurufen, das damit gekoppelt ist; und Sende-Mittel (TR), um eine Benachrichtigungsmeldung (ALT) auf der Übertragungsebene gemäß der Ortsinformation auf Übertragungsebene (GPRS-LOC-B) an das zweite Endgerät (T2) des zweiten Teilnehmers (B) zu senden, um dadurch das zweite Endgerät (T2) über einen eintreffenden Anruf im Paketvermittlungsmodus (PS) zu benachrichtigen und dadurch das zweite Endgerät (T2) in die Lage zu versetzen, bei Empfang der Benachrichtigungsmeldung (ALT) eine Anwendungs-Registrierungs-Nachricht (REG) zur Anrufsteuerung auf der Anwendungs-Ebene auszulösen, wodurch Ortsinformation (SIP-LOC-B) auf Anwendungs-Ebene zur Speicherung in einem Ortsregister auf Anwendungs-Ebene (HPD) des Telekommunikationsnetzes bereitgestellt wird und wodurch das Telekommunikationsnetz in die Lage versetzt wird, den Anruf im Paketvermittlungs-Modus (PS) zu dem zweiten Endgerät (T2) des zweiten Teilnehmers (B) auf der Anwendungs-Ebene gemäß der Ortsinformation auf Anwendungs-Ebene (SIP-LOC-B) zu leiten.

10. Ein zweites Endgerät (T2) eines zweiten Teilnehmers (B) in einer Multimedien-Telekommunikation, wobei der zweite Teilnehmer (B) über das zweite Endgerät (T2) gemäß einer Ortsinformation auf Übertragungsebene (GPRS-LOC-B) des zweiten Teilnehmers (B), der in einem Ortsregister (HLR) auf Übertragungsebene des Telekommunikationsnetzes gespeichert ist, registriert wird, wobei ein Anruf im Paketvermittlungs-Modus (PS) von einem ersten Endgerät (T1) eines ersten Teilnehmers (A), der mit einem zweiten Teilnehmer (B) kommunizieren möchte, weitergeleitet werden muss, **dadurch gekennzeichnet, dass** das zweite Endgerät (T2) Empfangs-Mittel (REC) enthält, um in dem Fall, dass der zweite Teilnehmer (B) nicht zur Anrufsteuerung auf einer Anwendungs-Ebene des Telekommunikationsnetzes registriert ist, eine Benachrichtigungsmeldung (ALT) zu empfangen, um von einem eintreffenden Anruf im Paketvermittlungs-Modus (PS) benachrichtigt zu werden, wobei die Benachrichtigungsmeldung (ALT) durch ein Anruf-Dienst-Mittel (CSM) des Telekommunikationsnetzes zu dem zweiten Endgerät (T2) des zweiten Teilnehmers (B) auf der Übertragungsebene gemäß der Ortsinformation auf Übertragungsebene (GPRS-LOC-B) übertragen wird, wobei die Ortsinformation auf Übertragungsebene (GPRS-LOC-B) von den Anruf-Dienst-Mitteln (CSM) bei Empfang eines Anrufs im Paketvermittlungs-Modus für den zweiten Teilnehmer (B) aus dem Ortsregister (HLR) auf Übertragungsebene abgerufen wird, wodurch das zweite Endgerät (T2) in die Lage versetzt wird, eine Anwendungs-Registrierungs-Nachricht (REG) zur Anrufsteuerung auf der Anwendungs-Ebene auszulösen, wobei Ortsinformation auf Anwendungs-Ebene (SIP-LOC-B) zur Speicherung in einem Ortsregister auf Anwendungs-Ebene (HPD) des Telekommunikationsnetzes bereitgestellt wird und um dadurch das Telekommunikationsnetz in die Lage zu versetzen, den Anruf im Paketvermittlungs-Modus (PS) zu dem zweiten Endgerät (T2) des zweiten Teilnehmers (B) auf der Anwendungs-Ebene gemäß der Ortsinformation auf Anwendungs-Ebene (SIP-LOC-B) zu leiten.

11. Das zweite Endgerät (T2) gemäß Anspruch 10, **dadurch gekennzeichnet, dass** es weiterhin Initialisierungs-Mittel (INIT) enthält, um die Anwendungs-Registrierungs-Nachricht (REG) zur Anrufsteuerung auf der Anwendungs-Ebene auszulösen.

12. Ein Multimedien-Telekommunikationsnetz, **dadurch gekennzeichnet, dass** das Netzwerk ein beliebiges Anruf-Dienst-Mittel (CSM) gemäß Anspruch 9, ein zweites Endgerät (T2) gemäß Anspruch 10 und ein zweites Endgerät (T2) gemäß Anspruch 10, sowie ein zweites Endgerät (T2) gemäß Anspruch 11 enthält.

## Revendications

1. Procédé pour acheminer un appel en mode à commutation de paquets (PS) d'un premier terminal (T1) d'un premier utilisateur (A), qui souhaite communiquer avec un deuxième utilisateur (B), jusqu'à un deuxième terminal (T2) dudit deuxième utilisateur (B) dans un réseau de télécommunication multimédia, ledit procédé comprenant une étape consistant à :
enregistrer ledit deuxième utilisateur (B) par l'intermédiaire dudit deuxième terminal (T2) conformément à un niveau de support dudit réseau de télécommunication, fournissant de ce fait des informations de localisation de niveau de support (GPRS-LOC-B) dudit deuxième utilisateur (B) qui sont mémorisées dans un registre de localisation de niveau de support (HLR) dudit réseau de télécommunication, **caractérisé en ce que**, dans le cas où ledit deuxième utilisateur (B) n'est pas enregistré pour un contrôle d'appel à un niveau d'application dudit réseau de télécommunication, ledit procédé comprend les étapes consistant à :
a) lors de la réception dudit appel en mode à commutation de paquets pour ledit deuxième utilisateur (B), récupérer, par des moyens de service d'appel (CSM) dudit réseau de télécommunication, lesdites informations de localisation de niveau de support (GPRS-LOC-B) dudit deuxième utilisateur (B) dans ledit registre de localisation de niveau de support (HLR) ; et
b) transmettre, par lesdits moyens de service d'appel (CSM), un message d'alerte (ALT), sur ledit niveau de support, conformément auxdites informations de localisation de niveau de support (GPRS-LOC-B), au dit deuxième terminal (T2) dudit deuxième utilisateur (B) et, de ce fait, avertir ledit deuxième terminal (T2) d'un appel en mode à commutation de paquets (PS) entrant afin de permettre, de ce fait, au dit deuxième terminal (T2) d'initialiser, lors de la réception dudit message d'alerte (ALT), un message de registre d'application (REG) pour un contrôle d'appel au dit niveau d'application, moyennant quoi des informations de localisation de niveau d'application (SIP-LOC-B) sont fournies pour mémorisation dans un registre de localisation de niveau d'application (HPD) dudit réseau de télécommunication et afin de permettre, de ce fait, au dit réseau de télécommunication d'acheminer ledit appel en mode à commutation de paquets (PS) jusqu'au dit deuxième terminal (T2) dudit deuxième utilisateur (B) au dit niveau d'application conformément auxdites informations de localisation de niveau d'application (SIP-LOC-B).

2. Procédé selon la revendication 1, **caractérisé en ce que** ledit procédé comprend, en outre, une étape c) consistant à initialiser, lors de la réception dudit message d'alerte (ALT) par ledit deuxième terminal (T2), un message de registre d'application (REG) pour un contrôle d'appel au dit niveau d'application et, de ce fait, fournir des informations de localisation de niveau d'application (SIP-LOC-B) pour mémorisation dans un registre de localisation de niveau d'application (HPD) dudit réseau de télécommunication afin de permettre, de ce fait, au dit réseau de télécommunication d'acheminer ledit appel en mode à commutation de paquets jusqu'au dit deuxième terminal (T2) dudit deuxième utilisateur (B) au dit niveau d'application.

3. Procédé pour acheminer un appel en mode à commutation de paquets selon l'une quelconque des revendications précédentes, **caractérisé en ce que** ledit réseau de télécommunication est un réseau de télécommunication mobile.

4. Procédé pour acheminer un appel en mode à commutation de paquets selon l'une quelconque des revendications précédentes, **caractérisé en ce que** ledit niveau de support dudit réseau de télécommunication est un système général de radiocommunication en mode paquet.

5. Procédé pour acheminer un appel en mode à commutation de paquets selon l'une quelconque des revendications précédentes, **caractérisé en ce que** ledit contrôle d'appel au niveau d'application dudit réseau de télécommunication est un protocole de lancement de session, moyennant quoi ledit message de registre d'application (REG) est un message de registre de protocole de lancement de session.

6. Procédé pour acheminer un appel en mode à commutation de paquets, **caractérisé en ce que** ledit procédé comprend la vérification d'une base de données de préférences de services d'un réseau de télécommunication multimédia lors d'un mode d'acheminement préféré réel dudit deuxième utilisateur (B), et dans le cas où ledit mode d'acheminement préféré réel est un mode d'acheminement à commutation de paquets, l'exécution du procédé pour acheminer un appel en mode à commutation de paquets selon l'une quelconque des revendications précédentes.

7. Procédé pour acheminer un appel en mode à commutation de paquets selon l'une quelconque des revendications 2 à 6, **caractérisé en ce qu'**une étape c) consistant à initialiser par ledit deuxième terminal (T2) un message de registre d'application (REG) est exécutée automatiquement lors de la réception dudit message d'alerte (ALT).

8. Procédé pour acheminer un appel en mode à commutation de paquets selon l'une quelconque des revendications 2 à 6, **caractérisé en ce** ledit procédé comprend, en outre, lors de la réception dudit message d'alerte (ALT) par ledit deuxième terminal (T2), la signalisation au dit deuxième utilisateur (B), par ledit deuxième terminal (T2), de la réception dudit message d'alerte (ALT) et la commande, par ledit deuxième utilisateur (B), au dit deuxième terminal (T2), d'exécuter ladite étape c).

9. Moyens de service d'appel (CSM) pour acheminer un appel en mode à commutation de paquets (PS) d'un premier terminal (T1) d'un premier utilisateur (A), qui souhaite communiquer avec un deuxième utilisateur (B), jusqu'à un deuxième terminal (T2) dudit deuxième utilisateur (B), ledit deuxième utilisateur (B) étant enregistré par l'intermédiaire dudit deuxième terminal (T2) conformément à un niveau de support d'un réseau de télécommunication, moyennant quoi des informations de localisation de niveau de support (GPRS-LOC-B) dudit deuxième utilisateur (B) sont fournies et mémorisées dans un registre de localisation de niveau de support (HLR) dudit réseau de télécommunication, **caractérisé en ce que** lesdits moyens de service d'appel (CSM) comprennent des moyens de récupération (RET) pour récupérer, dans le cas où ledit deuxième utilisateur (B) n'est pas enregistré pour un contrôle d'appel à un niveau d'application dudit réseau de télécommunication, lors de la réception dudit appel en mode à commutation de paquets (PS) pour ledit deuxième utilisateur (B), lesdites informations de localisation de niveau de support (GPRS-LOC-B) dudit deuxième utilisateur (B) dans ledit registre de localisation de niveau de support (HLR) couplé à celui-ci, et des moyens d'émission (TR) pour émettre un message d'alerte (ALT), au dit niveau de support, conformément auxdites informations de localisation de niveau de support (GPRS-LOC-B) vers ledit deuxième terminal (T2) dudit deuxième utilisateur (B) afin d'avertir, de ce fait, ledit deuxième terminal (T2) d'un appel en mode à commutation de paquets (PS) entrant et pour permettre, de ce fait, au dit deuxième terminal (T2) d'initialiser, lors de la réception dudit message d'alerte (ALT), un message de registre d'application (REG) pour un contrôle d'appel au dit niveau d'application, moyennant quoi des informations de localisation de niveau d'application (SIP-LOC-B) sont fournies pour mémorisation dans un registre de localisation de niveau d'application (HPD) dudit réseau de télécommunication et moyennant quoi ledit réseau de télécommunication est autorisé à acheminer ledit appel en mode à commutation de paquets (PS) jusqu'au dit deuxième terminal (T2) dudit deuxième utilisateur (B) au dit niveau d'application conformément auxdites informations de localisation de niveau d'application (SIP-LOC-B).

10. Deuxième terminal (T2) d'un deuxième utilisateur (B) dans une télécommunication multimédia, ledit deuxième utilisateur (B) étant enregistré par l'intermédiaire dudit deuxième terminal (T2) conformément à des informations de localisation de niveau de support (GPRS-LOC-B) dudit deuxième utilisateur (B) qui sont mémorisées dans un registre de localisation de niveau de support (HLR) dudit réseau de télécommunication, un appel en mode à commutation de paquets (PS) doit être acheminé à partir d'un premier terminal (T1) d'un premier utilisateur (A) qui souhaite communiquer avec ledit deuxième utilisateur (B), **caractérisé en ce que** ledit deuxième terminal (T2) comprend des moyens de réception (REC) pour recevoir, dans le cas où ledit deuxième utilisateur (B) n'est pas enregistré pour un contrôle d'appel à un niveau d'application dudit réseau de télécommunication, un message d'alerte (ALT) afin d'avertir d'un appel en mode à commutation de paquets (PS) entrant, ledit message d'alerte (ALT) étant transmis par des moyens de service d'appel (CSM) dudit réseau de télécommunication au dit deuxième terminal (T2) dudit deuxième utilisateur (B) au dit niveau de support conformément auxdites informations de localisation de niveau de support (GPRS-LOC-B), lesdites informations de localisation de niveau de support (GPRS-LOC-B) étant récupérées par lesdits moyens de service d'appel (CSM) lors de la réception dudit appel en mode à commutation de paquets pour ledit deuxième utilisateur (B) dans ledit registre de localisation de niveau de support (HLR) en conséquence, ledit deuxième terminal (T2) étant, de ce fait, autorisé à initialiser un message de registre d'application (REG) pour un contrôle d'appel au dit niveau d'application, moyennant quoi des informations de localisation de niveau d'application (SIP-LOC-B) sont fournies pour mémorisation dans un registre de localisation de niveau d'application (HPD) dudit réseau de télécommunication et afin de permettre, de ce fait, au dit réseau de télécommunication d'acheminer ledit appel en mode à commutation de paquets (PS) jusqu'au dit deuxième terminal (T2) dudit deuxième utilisateur (B) au dit niveau d'application conformément auxdites informations de localisation de niveau d'application (SIP-LOC-B).

11. Deuxième terminal (T2) selon la revendication 10, **caractérisé en ce qu'**il comprend en outre des moyens d'initialisation (INIT) pour initialiser ledit message de registre d'application (REG) pour un contrôle d'appel au dit niveau d'application.

12. Réseau de télécommunication multimédia, **caractérisé en ce que** ledit réseau comprend l'un quelconque de moyens de service d'appel (CSM) selon la revendication 9, d'un deuxième terminal (T2) selon la revendication 10 et d'un deuxième terminal (T2) selon la revendication 11.
